# EUROPEAN PATENT SPECIFICATION

(11) **EP 3 393 274 B1**
(45) Date of publication and mention of the grant of the patent: **25.09.2019**
(21) Application number: 16825595.8
(22) Date of filing: 23.12.2016
(51) Int. Cl.: A23L 33/00, A23L 33/17

(54) **HIGH PROTEIN NUTRITIONAL PRODUCT**
PROTEINREICHES ERNÄHRUNGSPRODUKT
PRODUIT NUTRITIF HAUTEMENT PROTÉIQUE

(30) Priority: 24.12.2015 EP 15202704
(43) Date of publication of application: 31.10.2018
(73) Proprietor: OrgaNext Life Science B.V., 6811 AA Arnhem (NL)
(72) Inventor: PRINS, Marjanna, 6811 AA Arnhem (NL); OVERBEEKE, Nicolaas, 6811 AA Arnhem (NL)
(74) Representative: V.O.
(86) International application number: PCT/NL2016/050922
(87) International publication number: WO 2017/111604

(56) References cited:
- WO-A1-2012/005568
- US-A1- 2002 168 448
- US-A1- 2007 077 345
- US-B1- 6 248 375

## Description

### Field of the invention

The invention relates to high protein nutritional compositions and food products comprising vitamin D. In particular, the invention relates to a unique combination of a liquid or spoonable composition and solid food products, which combination allows to obtain a high protein content in a relatively low volume of nutritional product, which product at the same time has a pleasant taste and mouthfeel. The invention further relates to the use of such compositions and food products for use in stimulating muscle growth and/or maintaining muscle mass and function and for use in treating and/or preventing loss of muscle mass, loss of muscle function and/or loss of physical performance.

### Background of the invention

High protein nutritional supplements and drinks have been used for years by individuals with increased needs, such as athletes, pregnant women, patients recovering from illness or surgery and the elderly. A hallmark of aging is a progressive loss of muscle mass. Loss of muscle in aging individuals may lead to reduced muscle strength, increased incidence of falls and fractures and, consequently, hospitalization, impaired functioning of the immune system and reduced overall physical performance. Together with inactivity, which is also frequently observed in elderly individuals, this results in a downward spiral of functional and cognitive decline and loss of independence. It has been established that loss of muscle mass is less severe in elderly having or maintaining a high level of physical activity. However, even active elder individuals experience muscle loss. This muscle loss in elderly individuals occurs independent from health status, meaning that otherwise healthy elderly suffer from loss of muscle mass and function. Progressive muscle loss with aging is therefore not only a concern in e.g. ill, hospitalized or frail elderly, but also in otherwise healthy elder individuals in order to stay physically active and improve quality of life.

In addition to physical activity, good nutrition is important to counteract loss of muscle mass in elderly individuals. It has been shown that elderly need more protein to support good health and maintain physical functionality. However, aging seniors rarely consume enough proteins. Typically, daily protein at for instance breakfast is often no more than 5-10 gram of protein instead of the recommended 20-30 grams per meal.

Besides a decreased protein intake, many elderly also have inadequate vitamin D intake. This has for instance in the Netherlands been shown for 90% of elderly individuals, even though vitamin D supplementation is recommended. Vitamin D deficiency is defined as plasma 25-hydroxyvitamin D levels below 25 nmol/l and vitamin D insufficiency as levels below 50 nmol/l. Vitamin D deficiency or insufficiency is a risk for a significant reduction in physical performance, osteoporosis, falls and factures, and sarcopenia. Vitamin D deficiency has further been correlated with other disorders that are frequent among the elderly, such as cardiovascular disorders, type-2 diabetes, Alzheimer's disease and several types of cancer such as breast, prostate and colon cancer. The recommended daily supplementation of vitamin D is 800 IU (20 µg).

Several high protein liquid or semi-liquid products have been described or are available on the market, such as Ensure Active® High Protein Nutrition Shake (Abbott Nutrition), which contains 25 grams of protein in 414 ml, and Nutridrink® (Nutricia), which contains 18 g of protein per 200 ml (thus requiring 250 ml for 22.5 gr protein). Another product is Fortimel Compact Protein® (Nutricia), which contains 14.4 g of protein per 100 ml (thus having 18 g protein per serving of 125 ml). These products have several disadvantages. For instance, they are usually provided in a large volume necessary to achieve a high protein content of at least 20 g protein. As a result, compliance among, in particular, the elderly is low because the elderly generally have difficulties consuming food in large volumes. Further, it is well known that a high protein content in liquid or semi-liquid products results in an unpleasant taste and texture. Hence, the smaller the volume of these products for a given amount of protein, the more unpleasant the taste thereof. In addition, these high-protein drinks often fall in the medical nutrition category for instance due to the addition of specific ingredients, such as specific amino acids, vitamins and minerals. Medical nutrition products need to be prescribed by medical professionals. They are usually prescribed to patients suffering from a variety of diseases as a complement to drug therapy and are not suitable for otherwise healthy elderly wishing to maintain their physical activity and quality of life, or wishing to become more active.

Several documents describe high protein food products that are in solid form, such as cereal, snacks and nutritional (sports) bars. US 2002/0168448 describes chocolate coated food bars containing high protein, e.g. 5-25% by weight. The bars serve to provide sustained energy to the consumer and have the taste and chew texture of candy bars. Such food bars are supplements and not meal replacements. Addition of vitamin D is not described. WO 2014/059103 describes partially hydrolysed soy protein crisps containing at least 70% by weight of protein. These crisps are suitable for incorporation into snack foods, nutritional bars, breakfast bars and breakfast cereals.

WO 2012/005582 relates to a method of treating loss of muscle mass, strength, function and physical function using a liquid, spoonable or solid composition comprising an anabolic amino acid derivative stimulus, preferably L-leucine, citrulline or creatine, and vitamin D. The compositions comprise 10-12 g proteinaceous matter and at least 400 IU (10 µg) vitamin D per 100 ml. The daily dose of vitamin D is 800 IU (20 µg) or more, preferably at least 1000 IU. As a result of the high amount of vitamin D and added amino acids such compositions fall within the category of medical nutrition. Further, the liquid products suffer from the unpleasant taste and texture associated with high protein content in the liquid products.

WO 2012/005568 describes liquid or spoonable compositions that contain at least 12 g of proteinaceous matter per 100 kcal and per 100 ml, as the nutritional compositions contain 100 kcal/100 ml, preferably at least 14 g of proteinaceous matter per 100 kcal and per 100 ml. Also described are solid compositions that contain approximately 50 g proteinaceous matter per 100 g. The solid compositions are in the form of powder and intended for reconstitution in an aqueous solution in order to obtain the described liquid or spoonable compositions. Exemplified liquid compositions contain only between 10.5 and 12 g protein per 100 ml. As a result, the protein content of the compositions is either relatively low (10-12 g per 100 ml) to achieve the recommended daily intake per meal or too high.(at least 14 g per 100 ml) to provide a pleasant taste and texture. The compositions further contain at least 800 IU (20 µg) per daily dose or 400 IU (10 µg) per 100 ml, which is well above the amounts that are typically allowed in food products (e.g. 4.5 µg per 100 kcal in The Netherlands). None of the known and/or commercially available high protein compositions combine a liquid or spoonable product basis with a relatively low volume, needed for ease of consumption by particularly elder individuals and a pleasant taste and mouthfeel, high vitamin D supplementation and a long storage life. Therefore, there is a continuing need for improved high protein food products that address the disadvantages discussed above.

US 2002/168448 describes a nutritional food bar for providing sustained energy to the consumer, said bar having a core present at about 60-90% by weight of said bar and a coating present at about 10-40% by weight of said bar, wherein said bar comprises a mixture of vitamins, minerals, proteins at about 5-25% by weight of said bar, carbohydrates at about 45-85% by weight of said bar, and fats at about 8-20% by weight of said bar; wherein said core is a non-baked grain-based mixture comprising a rice crisp component present at about 10-30% by weight of said bar, said component comprised of at least one extruded rice crisp component and at least one toasted rice crisp component in a ratio of about 80:20 to about 40:60 by weight; and wherein said coating is confectioner's coating selected from chocolate and compound coatings.

### Summary of the invention

It is an object of the present invention to provide a ready-to-use attractive tasting nutritional product containing high levels of high quality protein in combination with vitamin D. It is a further object to provide a liquid or spoonable nutritional composition that can be consumed as part of the regular diet, for instance as a breakfast product. It is a further object to provide nutritional compositions that fulfil the nutritional recommendations for protein and vitamin D content in a meal, preferably for the elderly. The invention therefor provides nutritional composition comprising:
- a liquid or spoonable nutritional composition comprising between 10 and 12% protein, a source of fat and a source of carbohydrate, and
- a plurality of solid nutritional products having an average diameter of 2-10 mm and comprising at least 20 weight% protein and comprising a coating that covers at least a portion of said product, said coating comprising a vitamin D compound,
wherein said product comprises at least 0.1 µg of said vitamin D compound per gram of the coated solid nutritional product,
wherein said nutritional composition comprises:
- 75-90% by weight of said liquid or spoonable nutritional composition and 10-25% by weight of said plurality of solid nutritional products, and
- at least 12.5 gr protein and 4.5-6.5 µg of said vitamin D compound per 100 gr of the total nutritional composition.

In a further aspect, the invention provides a solid nutritional product comprising at least 20 weight% protein and comprising a coating that covers at least a portion of said product, said coating comprising a vitamin D compound, wherein said product comprises at least 0.1 µg of said vitamin D compound per gram of the coated solid nutritional product.

In a further aspect the invention provides a method for the preparation of solid nutritional products according to the invention, comprising:
- providing a mixture of ingredients, said ingredients comprising at least 20% protein;
- passing said mixture through an extruder to form a solid product, preferably a crisp; and
- providing said product with a coating comprising chocolate in an amount of 30-75% of the total weight of the coated product, whereby said coating comprises a vitamin D compound, preferably vitamin D3, in an amount resulting in at least 0.1 µg of said vitamin D compound per gram of the coated product, preferably the coated crisp.

In a still further aspect the invention provides a composition comprising a liquid or spoonable nutritional composition comprising at least 7% protein, a source of fat and a source of carbohydrate, and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products.

In a still further aspect the invention provides a nutritional composition comprising a liquid or spoonable nutritional composition comprising at least 7% protein, a source of fat and a source of carbohydrate, and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products, which composition comprising at least two containers wherein a first container comprises said liquid or spoonable nutritional composition and a second container comprises said plurality of solid nutritional products.

In a still further aspect the invention provides a packaged food product comprising at least a first and a second compartment, said product further comprising the composition comprising a liquid or spoonable nutritional composition comprising at least 7% protein, a source of fat and a source of carbohydrate, and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products, wherein said first compartment comprises said liquid or spoonable nutritional composition and said second compartment comprises said plurality of solid nutritional products.

In a further aspect the invention provides a liquid or spoonable nutritional composition according to the invention and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products for use in therapy.

In a still further aspect the invention provides a composition comprising a liquid or spoonable nutritional composition comprising at least 7% protein, a source of fat and a source of carbohydrate, and a plurality of solid nutritional products and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products for use in therapy, in particular for use in stimulating muscle growth and/or maintaining muscle mass and function and/or for use in treating and/or preventing loss of muscle mass, loss of muscle function and/or loss of physical performance, in particular for use in stimulating muscle growth and/or maintaining muscle mass and function and/or for use in treating and/or preventing loss of muscle mass, loss of muscle function and/or loss of physical performance.

In a still further aspect the invention provides a solid nutritional product and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products for the preparation of a medicament for the treatment and/or prevention of loss of muscle mass, loss of muscle function and/or loss of physical performance.

In a still further aspect the invention provides a composition comprising a liquid or spoonable nutritional composition comprising at least 7% protein, a source of fat and a source of carbohydrate, and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products for the preparation of a nutritional composition or medicament for the treatment and/or prevention of loss of muscle mass, loss of muscle function and/or loss of physical performance.

In a still further aspect the invention provides a method of treatment and/or prevention of loss of muscle mass, loss of muscle function and/or loss of physical performance comprising administering to a subject in need thereof a composition a composition comprising a liquid or spoonable nutritional composition comprising at least 7% protein, a source of fat and a source of carbohydrate, and a plurality of solid nutritional products and a plurality of solid nutritional products comprising at least 20 weight% protein and comprising a coating that covers at least a portion of said products, said coating comprising a vitamin D compound, wherein said products comprise at least 0.1 µg of said vitamin D compound per gram of the coated solid nutritional products.

### Detailed description

The high-protein products of the present invention are composed of ingredients that deliver the requisite amount of protein and vitamin D to the body that is needed for energy and muscle maintenance and development, while having an attractive taste, texture and mouthfeel. In particular, the present invention succeeds in combining a relatively small volume of a single serving with a pleasant taste and mouthfeel and ease of use for elderly individuals. These properties were until now mutually exclusive: before the present invention, a high percentage of protein in a liquid or spoonable dairy based product resulted in an unpleasant taste and texture. Hence, a high volume was needed to achieve an acceptable taste of the product. Indeed, shelf stable liquid or spoonable products with a volume of less than 200 ml or a mass of less than 200 gr, but containing more than 20 grams of protein were not know or available because such products would have an unacceptable taste and texture. This problem is solved by providing the combination of a liquid or spoonable composition and solid food particles. Indeed, this unique combination of the two components allows to obtain a high protein content in a relatively low volume of nutritional product (at least 12.5 g per 100 g), which product at the same time has a pleasant taste and mouthfeel, and that is easy to consume in particular by elderly individuals.

One characteristic of ageing is that the ability to taste and smell diminishes over time. This decline in sensory sensitivity starts round the age of 60. In elderly individuals suffering from such reduced taste and smell other sensory stimulations become more important. In particular, texture and mouthfeel of food products and maximum chewing efficiency resulting in an optimal release of flavour components become more important for an enjoyable eating experience in old age. Trigeminal sensations, such as cooling, burning, spiciness, fizziness or tingling, pungency and astringency remain relatively intact in old age and modulate and enrich the perception of taste. The nutritional products of the present invention meets these changing demands of the elderly by combining a liquid or spoonable dairy product with, preferably chocolate, coated protein crisps, resulting in an improved texture sensation and mouthfeel. This excellent taste perception and mouthfeel have the additional benefit that compliance, i.e. the motivation to follow a daily consumption routine, is high.

A further advantage of the food products of the invention is that the product has a long storage stability or ambiance stability. The stability of vitamin D is a crucial aspect both during processing and subsequent storage as degradation of vitamin D, for instance under the influence of light, is well known. This long storage stability or ambiance stability is preferably achieved by the incorporation of vitamin D in a, preferably chocolate, coating of the high protein crisps. As shown in Example 4, the vitamin D content of a product according to the invention remains stable during storage for at least 8 months if stored in the dark. Storage in daylight condition results in a decrease of only 20% after 8 months. Application of vitamin D to the crisps after a coating has been applied also results in a product having a stable vitamin D content when stored in the dark. The storage life a composition or packaged food product according to the invention is preferably at least 3 months, more preferably at least 6 months, more preferably at least 8 months, more preferably at least one year. A further advantage of blending the vitamin D in the chocolate coating or applying it to the chocolate coating of the high protein crisps is that the intestinal absorption is stimulated. Vitamin D is a fat soluble vitamin which needs a fat carrier, such as that present in chocolate, for absorption in the intestines.

A solid nutritional product according to the present invention comprises at least 20 weight% protein and at least 0.1 µg of a vitamin D compound per gram of the coated solid nutritional product. Said solid nutritional product is preferably a crisp. As used herein the term "crisp" refers to a solid nutritional product with an average diameter of 2-10 mm, having a crispy or crunchy texture and mouthfeel when chewed on. Preferably the average diameter of such crisp is 3-9 mm, more preferably 4-7 mm. Solid nutritional products according to the present invention can be of any shape, such as oval or circular. For non-circular product, e.g. oval or elliptical products, the average diameter refers to the average of the sum of greater axis and smaller axis dimensions. Protein crisps according to the invention are for instance prepared by extrusion of a mixture of its constituents. The mixture is passed through an extruder to form the protein crisps. Extruders and processes to prepare protein crisps in accordance with the invention are well known in the art.

A solid nutritional product according to the invention, preferably a crisp with an average diameter of 2-10 mm, comprises at least 20 weight% protein, preferably at least 22 weight% protein, more preferably at least 24 weight% protein, more preferably at least 25 weight% protein, whereby said weight percentages are based on the total weight of the coated nutritional product. In one embodiment, such solid nutritional product comprises at least 28 weight% protein, more preferably at least 30 weight% protein. Preferably, a solid nutritional product according to the invention, preferably a crisps with an average diameter of 2-10 mm, comprises 20-40 weight% protein, more preferably 25-35 weight% protein, such as 25 weight%, 26.5 weight%, 28 weight% or 30 weight% protein, whereby said weight percentages are based on the total weight of the coated nutritional product.

The protein in a solid nutritional product or crisp according to the invention can be any type of protein, such as milk protein, whey, casein or soy protein. It is further possible to use vegetable proteins, such as rapeseed protein or protein from algae. In a preferred embodiment, the source of protein comprises milk protein, casein or whey, more preferably milk protein or whey. In a further preferred embodiment, the protein in a solid nutritional product or crisp according to the invention essentially consists of milk protein and/or whey protein.

The solid nutritional products or crisps according to the invention optionally comprise further components, such as fillers, flowing agents, binders and emulsifiers. A preferred emulsifier is soy lecithin. Preferred examples of fillers include, but are not limited to, rice flour, starch and carbohydrates such as sucrose, fructose, dextrose and maltose. Particularly preferred filler are rice flour and dextrose. These components are preferably mixed with the protein before the extrusion process used to form the crisps. In addition, solid nutritional products or crisps according to the invention may comprises further additives such as, but not limited to, further vitamins, e.g. vitamin A, folic acid, vitamin B6, vitamin B12, vitamin C, vitamin E. vitamin K, minerals, e.g. sodium, potassium, calcium, phosphorous, magnesium, zinc and iron, colouring agents, flavouring agents, preservatives, antioxidants.

The solid nutritional product or crisp according to the invention comprises a coating that covers at least a portion of said product or crisp. Said coating comprises said vitamin D compound, preferably vitamin D3. The coating is for instance a chocolate coating, a yogurt coating or a sugar coating, e.g. with vanilla flavour. The coating may comprise further additives such as glazing agents. Preferably, said coating comprises chocolate. In a preferred embodiment, said coating essentially consists of chocolate and said vitamin D compound, and said vitamin D compound is blended into the chocolate. Optionally, other micronutrients such as vitamins or minerals may be blended into the chocolate coating. Alternatively, the coating is first applied to the solid nutritional product or crisp according to the invention, after which the vitamin D compound is applied to the coated product or crisp. The vitamin D coated product or crisp may subsequently be provided with yet another layer of coating, such as a layer of a glazing agent such as Arabic gum. The coating then comprises or consists of e.g. chocolate, vitamin D compound and a glazing agent. The coating covers at least a portion of the solid nutritional product, preferably crisp. Preferably, the coating covers essentially the entire surface of the solid nutritional product or crisp. In one embodiment, the coating covers the entire surface of the nutritional product or crisp. The coating can be applied to the solid nutritional products or crisps of the invention using standard techniques. For instance, the coating, preferably chocolate coating, can be made liquid or semi-solid by heating. Subsequently, the solid products or crisps can be immersed in the liquid or semi-solid coating.

"Chocolate" as used herein refers to chocolate used in food products and can include chocolate or components of chocolate such as cocoa, cocoa butter. Chocolate, cocoa and cocoa butter are well known food ingredients and a wide variety of chocolate and components thereof are commercially available, for example from Barry Callebaut, Lebbeke-Wieze, Belgium. Chocolate used in a coating in accordance with the invention preferably comprises cocoa, cocoa butter and sugar. The chocolate coating according to the present invention may additionally contain other ingredients such as milk solids, e.g. milk fat, sugar or other sweeteners such as sucrose, fructose, dextrose, corn syrup solids and maltose, salt, natural and artificial flavours, e.g., vanilla, vanillin, spices, coffee, nuts and mixtures thereof, and preservatives. Lecithin, such as soy lecithin, and/or other emulsifiers, are generally also used in chocolates. Preferably, chocolate used in a coating according to the invention preferably comprises at least 10% cocoa, more preferably at least 20%, more preferably at least 30%, more preferably at least 40%, such as 41, 42, 44, 45, 45.5, 46, 47, 48, 49 or 50% cocoa. Said chocolate further preferably comprises up to 60% sugar, more preferably up to 50%, such as 41, 42, 44, 45, 45.5, 46, 47, 48, 49 or 50% sugar. In addition, said chocolate further preferably comprises 1-20% cocoa butter, preferably 2-15%, more preferably 3-10%. In addition, said chocolate further preferably comprises 1-10% milk fat, preferably 2-7%, more preferably 3-5%. A typical composition of chocolate used in a coating of a food product or crisp according to the invention consist of cocoa (45,5%), sugar (45,5%), cocoa butter (5%), milkfat (3.5%), <1% soy lecithin and <1% vanilla flavour.

As used herein, the term "vitamin D compound" refers to vitamin D, analogues thereof and precursors thereof. Analogues and precursors of vitamin D are well known in the art. Preferably, a vitamin D compound is selected from the group consisting of vitamin D3 (cholecalciferol), vitamin D2 (ergocalciferol), calcidiol, calcitriol, doxercalciferol and calcipotriene. More preferably, the vitamin D compound is selected from the group consisting of vitamin D2, vitamin D3, calcidiol and calcitriol. Most preferably, said vitamin D compound is vitamin D3.

The vitamin D product is present in a solid nutritional product comprising at least 20 weight% protein, more preferably at least 25 weight% protein according to the invention, preferably a crisp with an average diameter of 2-10 mm, preferably 4-7 mm. Said vitamin D compound, preferably vitamin D3, is for instance blended into the coating that covers at least a portion of said solid product or crisp. For instance, the vitamin D compound can be dissolved in oil, such as corn oil, or in cacao butter and blended with the, preferably chocolate, coating in liquid or semi-solid form, for instance achieved by heating the coating substance. Alternatively, the coating is first applied to the solid nutritional product or crisp according to the invention, after which the vitamin D compound, e.g. dissolved in oil or in cacao butter, is applied to the coated product or crisp. The vitamin D coated product or crisp may subsequently be provided with yet another layer of coating, such as a layer of a glazing agent such as Arabic gum.

A solid nutritional product according to the invention, preferably a crisp with an average diameter of 2-10 mm, comprises at least 0.1 µg vitamin D compound per gram of the coated solid nutritional product or crisp, preferably at least 0.15 µg, more preferably at least 0.20 µg, more preferably at least 0.25 µg, more preferably at least 0.30 µg, more preferably at most 0.34 µg, most preferably at least 0.36 µg vitamin D compound per g of the coated solid nutritional product. Preferably, such solid nutritional product comprises between 0.1 and 0.6 µg vitamin D compound per gram of the coated solid nutritional product or crisp, more preferably between 0.2 and 0.55 µg, more preferably between 0.27 and 0.46 µg, more preferably between 0.30 and 0.42 µg, most preferably between 0.35 and 0.40 µg of said vitamin D compound per gram of the coated solid nutritional product or crisp. Said vitamin D compound is preferably vitamin D3.

Coated crisps according to the invention preferably consist of 25-70 weight% of crisp material and 30-75 weight% of the coating. The coating, preferably chocolate coating, comprising the vitamin D compound preferably is approximately 35-70 weight%, more preferably 40-60 weight%, more preferably 45-50 weight% of the coated crisps.

A composition according to the invention comprises a plurality of solid nutritional products or crisps according to the invention. A "plurality" as used herein refers to two or more than two of such solid nutritional products or crisps, such as two, three, four, five, six, seven, eight, nine, ten, fifteen, twenty, twenty-five. Preferably, a composition according to the invention comprises 10-25% by weight of said plurality of solid nutritional products or crisps.

Also provided is a method for the preparation of solid nutritional products according to the invention. Said method comprises providing a mixture of ingredients, said ingredients comprising at least 20 weight% protein, preferably whey protein, and optionally further ingredients such as rice flour, dextrose and/or lecithin, passing said mixture through an extruder to form a crisp product and providing said crisp product with a coating comprising chocolate in an amount of 30-75% of the total weight of the coated crisp, said coating comprising at least 0.1 µg of a vitamin D compound, preferably vitamin D3, per gram of the total weight of a coated crisp. Said vitamin D is preferably dissolved in oil, such as corn oil before mixing with the chocolate material of the coating.

In addition to a plurality of solid nutritional products or crisps, a composition according to the invention comprises a liquid or spoonable nutritional composition comprising at least 7% protein, a source of fat and a source of carbohydrate. Said nutritional composition is preferably a spoonable composition. "Spoonable" is a term well known in the art of, e.g. dairy and dairy based, nutritional products, and refers to a property of a semi-solid substance, meaning that a portion of the substance can be picked up from a bulk thereof using a spoon. Said liquid or spoonable nutritional composition is preferably a dairy based product, comprising e.g. milk, skim milk, low-fat milk, or milk proteins and preferably comprises added components.

A liquid or spoonable nutritional composition comprises at least 7% protein, preferably at least 8% protein, more preferably at least 9% protein, more preferably at least 10% protein, most preferably at least 10.5% protein, such as 11% protein. Such liquid or spoonable nutritional composition preferably comprises between 7% and 20% protein, more preferably between 8% and 17%, more preferably between 9% and 15%, more preferably between 10% and 12%, such as 10%, 11% or 12% protein. The protein in a liquid or spoonable nutritional composition according to the invention can be any type of high quality protein, such as milk protein, whey, casein or soy protein, or a mixture thereof. Preferably, the source of protein comprises milk protein, casein and/or whey protein. Preferably at least 85%, more preferably at least 90% of the protein in a liquid or spoonable nutritional composition in accordance with the invention is milk protein. Preferably at least 5%, e.g. about 10%, of the total protein is whey protein. Preferably, at least 4% of total protein consist of the amino acid leucine, preferably L-leucine. More preferably, at least 6% of the total protein in said liquid or spoonable nutritional composition is leucine, more preferably at least 8%, more preferably at least 10. Preferably, 4-32% of total protein is leucine, more preferably 6-27%, more preferably 8-22%, more preferably 10-18%, more preferably 10-15%, such as 11%, 12% or 13% of total protein in said liquid or spoonable nutritional composition.

The liquid or spoonable nutritional composition in accordance with the invention comprises at least one source of fat and at least one source of carbohydrates. The lipids making up the fat source may be any suitable fat or mixture fats, including animal fats, such as milk fat, and vegetable fats. Suitable vegetable fats are soy oil, palm oil, coconut oil, safflower oil, sunflower oil, corn oil, canola oil, and lecithins. Preferably, the source of fat comprises milk fats. Any suitable carbohydrates may be used, for example start, such as (modified) corn starch or potato starch, sucrose, lactose, glucose, fructose, corn syrup solids, and maltodextrins, and mixtures thereof.

The liquid or spoonable nutritional composition in accordance with the invention comprise dietary fibres. A liquid or spoonable nutritional composition comprising at least 7% protein, a source of fat and a source of carbohydrate preferably comprises at least 2 g fibre per 100 gr of the liquid or spoonable nutritional composition, more preferably at least 3 g per 100 gr, more preferably at least 4 g per 100 gr, more preferably at least 4.5 g per 100 gr, more preferably at least 4.8 g per 100 gr. Preferably, such nutritional composition comprises between 2 and 10 g fibre per 100 gr of the liquid or spoonable nutritional composition, more preferably between 3 and 8 g per 100 g, more preferably between 4 and 6 g per 100 g, more preferably between 4.5 and 5.5 g per 100 g, such as 4.5, 4.6, 4.7, 4.8, 4.9 or 5.0 g fibres per 100 g of the liquid or spoonable nutritional composition.

Many types of dietary fibres are suitable and available for use in a liquid or spoonable nutritional composition in accordance with the invention. Examples of suitable fibres include, but are not limited to, galactooligosaccharide, fructooligosaccharides, inulin, pectin, β-glucans, gums such as gum arabic, tragacanth, mucilages, guar and locust bean gum, agar, carageenans, alginates, xanthan, pea fibre and soy fibre. Preferably, a liquid or spoonable nutritional composition comprises at least inulin as a dietary fibre. Preferably at least 10% of said fibre is inulin, more preferably at least 25%, such as 30%, 35%, 40%, 45% or 50%. Alternatively, the fibre essentially consists of inulin. Preferably, a liquid or spoonable nutritional composition in accordance with the invention comprises at least 0.5 g inulin per 100 g of the nutritional composition, more preferably at least 0.7 g per 100 g, more preferably at least 1 g per 100 g, more preferably at least 1.2 g per 100 g of the liquid or spoonable nutritional composition, such as 1.2 g, 1.3 g, 1.4 g or 1.5 g of the liquid or spoonable nutritional composition.

Finally, a liquid or spoonable nutritional composition in accordance with the invention may comprises further additives such as, but not limited to, further vitamins, e.g. vitamin A, folic acid, vitamin B6, vitamin B12, vitamin C, vitamin E. vitamin K, minerals, e.g. sodium, potassium, calcium, phosphorous, magnesium, zinc and iron, colouring agents, flavouring agents, preservatives, antioxidants.

A typical liquid or spoonable nutritional composition according to the invention comprises low-fat milk, milk protein and whey protein, including about 1.3 gr of leucine, inulin, potato starch, sugar and flavouring and colouring agents.

The liquid or spoonable nutritional composition is preferably prepared by sterilizing a mixture of the ingredients using ultra high temperature processing (UHT).

Further provided is a nutritional composition comprising:
- a liquid or spoonable nutritional composition comprising at least 7% protein, a source of fat and a source of carbohydrate, and
- a plurality of solid nutritional products according to the invention. Said nutritional composition thus comprises a combination of a liquid or spoonable nutritional composition according to the invention and a plurality of solid nutritional products according to the invention.

Said composition preferably comprises 75-90% by weight of said liquid or spoonable nutritional composition, more preferably 80-90%, and preferably 10-25% by weight of said plurality of solid nutritional products, more preferably 10-20%. For instance, a typical composition according to the invention comprises 84% or 85% by weight of said liquid or spoonable nutritional composition and 15% by weight of said plurality of solid nutritional products. Hence, the nutritional composition according to the invention is a liquid or spoonable composition. Small amounts, for instance up to 5 weight%, of other ingredients may be present, for instance pieces of (dried) fruit. Hence, the liquid or spoonable composition and the plurality of solid food products preferably comprise at least 95% of the total weight of the nutritional composition.

It is further preferred that the nutritional composition essentially consist of natural ingredients. For instance, it is not necessary to add preservatives to the nutritional composition in order to provide for sufficient storage stability, as is currently used in most high protein food products.. Hence, the nutritional composition preferably does not contain a preservative.

Preferably, the liquid or spoonable nutritional composition and the plurality of solid nutritional products or crisps are present or provided in a composition according to the invention in a way that they are not mixed until shortly before the composition is consumed. Hence, the liquid or spoonable nutritional composition and the plurality of solid nutritional products or crisps are preferably provided or presented separately in a composition according to the invention. For instance, said liquid or spoonable nutritional composition and said plurality of solid nutritional products are present in separate compartments or containers. The liquid or spoonable nutritional composition and the plurality of solid nutritional products or crisps are preferably mixed shortly before consumption. This way, the improved texture and mouthfeel of the nutritional product of the invention is retained until consumption of the product.

Also provided is a packaged food product comprising a composition according to the invention. The packaged food product comprises at least a first and a second compartment, said first compartment comprises a liquid or spoonable nutritional composition according to the invention and said second compartment comprising a plurality of solid nutritional products or crisps according to the invention. Said compartments are made of a material that is suitable to contain food products and may be comprised within a single container or are comprised in two separate containers. The first and a second compartment are isolated from each other in a way that prevents mixing of the liquid or spoonable composition and the solid nutritional products or crisps. For instance, the compartments can be separated by an intermediate partition or seal. A packaged food product preferably contains one serving of the composition according to the invention, preferably a daily serving. A serving is preferably less than 250 gr, preferably less than 200 g. Preferably, a single serving is 100-200 gr, more preferably 150-200 gr, more preferably 160-190 gr, most preferably 170-185 gr, such as 170, 173, 175, 176, 177, 178 or 180 g. Said serving is preferably a daily serving.

As explained herein before, the combination of the liquid or spoonable nutritional composition and the plurality of solid nutritional products or crisps provides the improved texture, taste and mouthfeel of the invention, in particular for elderly individuals. As used herein, the term "taste" refers to the sum of all organoleptic characteristics perceived in the mouth and nose when consuming a product of the invention. These organoleptic characteristics include sweetness, saltiness, acidity, bitterness, astringency and flavour. The term "mouthfeel" as used herein refers to tactile observations concerning the texture and sensation of texture in the mouth, including thickness, creaminess, temperature, crispiness, and viscosity of a product. The excellent taste perception and mouthfeel of the combined product of the invention in particular result from the unique combined sensation of flavour, thickness and creaminess of the liquid or spoonable composition, the crispiness of the solid food products (crisps) and the (chocolate) coating. The coated, preferably chocolate coated, crisps provide visual attractiveness, a unique, crispy texture to the final product and deliver a strong flavour. This excellent taste perception and mouthfeel contributes to a high compliance.

As described herein before, both the liquid or spoonable nutritional composition and the solid nutritional product or crisp comprise protein. Combination of both of these products into a nutritional composition in accordance with the invention results in a product with a particularly high protein content in a relatively low volume. Hence, a nutritional composition according to the invention combines a high protein content in a relatively low volume with a high content of vitamin D, a high storage stability and a pleasant taste and mouthfeel.

A nutritional composition according to the invention comprising a liquid or spoonable nutritional composition comprising at least 7% protein, a source of fat and a source of carbohydrate, and a plurality of solid nutritional products or crisps according to the invention preferably comprises at least 8.5 g protein per 100 gr of the total composition, more preferably at least 9.5 g per 100 gr, more preferably at least 11 g per 100 gr, more preferably at least 12 g per 100 gr, more preferably at least 12.5 g per 100 gr, such as 12.8, 13 or 13.2 g per 100 gr of the total composition. Preferably, such composition comprises between 8.5 and 25 g protein per 100 gr of the total composition, more preferably between 9.5 and 20 g per 100 g, more preferably between 11 and 15 per 100 g, more preferably between 12.5 and 15 g per 100 g. Preferably, in a packaged food product or composition according to the invention, protein is present in an amount of at least 15 g per serving, more preferably at least 17 g per serving, more preferably at least 20 g per serving, more preferably at least 22 gr per serving, such 22 g, 22.5 g or 23 g per serving. Preferably, protein is present in an amount of between 15 and 35 g per serving, more preferably between 17 and 30 serving, more preferably between 20 and 27 g per serving, more preferably between 22 and 25 g per serving. Said serving is preferably 170-185 g.

The vitamin D compound is preferably present in a composition according to the invention comprising a liquid or spoonable nutritional composition and a plurality of solid nutritional products or crisps according to the invention in an amount of at least 1.4 µg vitamin D compound per 100 gr of the total composition, more preferably at least 2 µg per 100 g more preferably at least 3 µg per 100 g, more preferably at least 4 µg per 100 g, more preferably at least 4.5 µg per 100 g, more preferably at least 5 µg per 100 g, most preferably at least 5.5 µg per 100 g. Preferably, such composition comprises between 1.4 and 9 µg vitamin D compound per 100 gr of the total composition, more preferably between 2 and 8.5 µg of the total composition more preferably between 3 and 8 µg per 100 g, more preferably between 4 and 7 µg per 100 g, more preferably between 4.5 and 6.5 µg per 100 g, more preferably between 5 and 6 µg per 100 g, such as 5.5 µg or 5.6 µg. Preferably, the vitamin D compound is used in a daily dose of at least 3.5 µg, more preferably at least 5 µg, more preferably at least 7 µg, more preferably at least 8 µg, more preferably at least 9 µg, more preferably at least 9.6 µg, such as 9.8 µg. The daily dose is preferably consumed in one serving. Hence, the vitamin D compound is preferably present in an amount of at least 2.5 µg per serving, more preferably at least 3.5 µg per serving, more preferably at least 5 µg per serving, more preferably at least 7 µg per serving, more preferably at least 8 µg per serving, more preferably at least 9 µg per serving, more preferably at least 9.6 µg per serving, such as 9.8 µg or 10 µg per serving. Preferably, the vitamin D compound is present in an amount of between 3.6 and 16 µg per serving, more preferably between 5 and 14 µg serving, more preferably between 7 and 12 µg per serving, more preferably between 8 and 11 µg per serving, more preferably between 9 and 10.5 µg per serving. Said serving is preferably 170-185 g.

Fibre is preferably present in a composition according to the invention comprising a liquid or spoonable nutritional composition and a plurality of solid nutritional products or crisps according to the invention in an amount of at least 2 g fibre per 100 gr of the total composition, more preferably at least 2.5 g per 100 gr, more preferably at least 3 g per 100 gr, more preferably at least 3.5 g per 100 gr, more preferably at least 4 g per 100 gr, such as 4.1 g per 100 gr of the total composition. Preferably, such composition comprises between 2 and 10 g fibre per 100 gr of the total composition, more preferably between 2.5 and 8 per 100 g, more preferably between 3 and 6 g per 100 g, more preferably between 3.5 and 4.5 g per 100 g. Preferably, in a packaged food product or composition according to the invention, fibre is present in an amount of at least 4 g per serving, more preferably at least 5 gr per serving, more preferably at least 6 g per serving, more preferably at least 7 gr per serving, such 7 g or 7.2 g per serving. Preferably, fibre is present in an amount of between 4 and 12 g per serving, more preferably between 5 and 10 serving, more preferably between 6 and 9 per serving, more preferably between 6.5 and 8 µg per serving. Said serving is preferably 170-185 g.

The energetic value of a composition according to the invention comprising a liquid or spoonable nutritional composition and a plurality of solid nutritional products or crisps according to the invention is preferably between 100 and 200 kcal per 100 g of the total composition, more preferably between 120 and 180 kcal per 100 g, more preferably between 130 and 150 kcal of the total composition, such as 130, 135, 140, 145 or 150 kcal per 100 g of the total composition. Preferably, the energetic value of a packaged food product or composition according to the invention is between 200 and 300 kcal per serving, more preferably between 220 and 280 kcal per serving, more preferably between 240 and 260 kcal per serving, such as 240, 245, 247, 250, 255 or 260 kcal per serving. Said serving is preferably 170-185 g.

Also provided is a crisp having an average diameter of 3-8 mm comprising at least 21% protein, preferably whey protein and 45-50% of a coating, whereby said percentage are based on the total weight of the coated crisp, wherein said coating comprising at least 0.1 µg of a vitamin D compound, preferably vitamin D3, per gram of the total coated crisp.

Also provided is a crisp having an average diameter of 3-8 mm comprising at least 25-35 weight% protein, preferably whey protein, and 45-50 weight% of a coating consisting essentially of chocolate and a vitamin D compound, whereby said percentage are based on the total weight of the coated crisp, wherein said crisp comprises between 0.35 and 0.40 µg of said vitamin D compound, preferably vitamin D3, per gram of the total coated crisp.

Also provided is a crisp having an average diameter of 3-8 mm comprising about 26.5 weight% protein and a coating consisting essentially of chocolate mixed with 0.38 µg of vitamin D3 per gram of the total coated crisps, whereby said percentage are based on the weight of the coated crisps.

Also provided is a crisp having an average diameter of 3-8 mm comprising about 30 weight% protein and a coating consisting essentially of chocolate mixed with 0.36 µg of vitamin D3 per gram of the coated crisps, whereby said percentage are based on the total weight of the coated crisps.

Also provided is a composition comprising:
- a liquid or spoonable nutritional composition comprising 10-12 weight% protein of which 11-13 weight% is leucine, 4.5-5.5 g of dietary fibre per 100 g of the nutritional composition, preferably comprising inulin, a source of fat and a source of carbohydrate; and
- a plurality of crisps having an average diameter of 3-8 mm comprising 25-35 weight% protein, preferably whey protein and 45-50 weight% of a coating, whereby said percentage are based on the total weight of the coated crisps, wherein said coating comprising ate least 0.30 µg of a vitamin D compound, preferably vitamin D3, per gram of the total coated crisps.

Also provided is a composition comprising:
- a liquid of spoonable composition comprising about 11 weight% protein, a source of fat and a source of carbohydrate; and
- a plurality of crisps having an average diameter of 3-8 mm comprising about 26.5 weight% protein and a coating consisting essentially of chocolate mixed with 0.38 µg of vitamin D3 per gram of the coated crisps, whereby said percentage are based on the total weight of the coated crisps.

Also provided is a composition comprising:
- a liquid of spoonable composition comprising about 11 weight% protein, a source of fat and a source of carbohydrate; and
- a plurality of crisps having an average diameter of 3-8 mm comprising about 30 weight% protein and a coating consisting essentially of chocolate mixed with 0.36 µg of vitamin D3 per gram of the coated crisps, whereby said percentage are based on the total weight of the coated crisps.

Also provided is a composition comprising:
- about 85% by weight of a liquid of spoonable composition comprising about 11 weight% protein, a source of fat and a source of carbohydrate;
- about 15% by weight of a plurality of crisps having an average diameter of 3-8 mm comprising about 26.5 weight% protein and a coating consisting essentially of chocolate mixed with 0.38 µg of vitamin D3 per gram of the total coated crisp, whereby said percentage are based on the total weight of the coated crisp.

Also provided is a composition comprising:
- about 84% by weight of a liquid of spoonable composition comprising about 11 weight% protein, a source of fat and a source of carbohydrate;
- about 15% by weight of a plurality of crisps having an average diameter of 3-8 mm comprising about 30 weight% protein and a coating consisting essentially of chocolate mixed with 0.36 µg of vitamin D3 per gram of the coated crisp, whereby said percentage are based on the total weight of the coated crisp.

Also provided is a composition comprising:
- about 85% by weight of a liquid of spoonable composition comprising about 11 weight% protein of which about 12% is leucine, about 4.8 g inulin per 100 g of the liquid or spoonable composition, a source of fat and a source of carbohydrate;
- about 15% by weight of a plurality of crisps having an average diameter of 3-8 mm comprising about 26.5 weight% protein and a coating consisting essentially of chocolate mixed with 0.38 µg of vitamin D3 per gram of the coated crisp, whereby said percentage are based on the total weight of the coated crisp.

Also provided is a composition comprising:
- about 84% by weight of a liquid of spoonable composition comprising about 11 weight% protein of which about 12% is leucine, about 4.8 g inulin per 100 g of the liquid or spoonable composition, a source of fat and a source of carbohydrate;
- about 15% by weight of a plurality of crisps having an average diameter of 3-8 mm comprising about 30 weight% protein and a coating consisting essentially of chocolate mixed with 0.36 µg of vitamin D3 per gram of the coated crisp, whereby said percentage are based on the total weight of the coated crisp.

Also provided is packaged food product comprising:
- a first compartment comprising about 85% by weight of the total food product of a liquid of spoonable composition comprising about 11 weight% protein of which about 12% is leucine, about 4.8 g inulin per 100 g of the liquid or spoonable composition, a source of fat and a source of carbohydrate;
- a second compartment comprising about 15% by weight of the total food product of a plurality of crisps having an average diameter of 3-8 mm comprising about 26.5 weight% protein and a coating consisting essentially of chocolate mixed with 0.38 µg of vitamin D3 per gram of the coated crisp, whereby said percentage are based on the total weight of the coated crisp. Such food product thus provides about 13.2 g of protein and about 5.6 µg of vitamin D3 per 100 g of the total food product.

Also provided is packaged food product comprising:
- a first compartment comprising about 84% by weight of the total food product of a liquid of spoonable composition comprising about 11 weight% protein of which about 12% is leucine, about 4.8 g inulin per 100 g of the liquid or spoonable composition, a source of fat and a source of carbohydrate;
- a second compartment comprising about 15% by weight of the total food product of a plurality of crisps having an average diameter of 3-8 mm comprising about 30 weight% protein and a coating consisting essentially of chocolate mixed with 0.36 µg of vitamin D3 per gram of the coated crisp, whereby said percentage are based on the total weight of the coated crisp. Such food product thus provides about 12.8 g of protein and about 5.5 µg of vitamin D3 per 100 g of the total food product.

Also provided is packaged food product comprising:
- a first compartment comprising about 150 g of a liquid of spoonable composition comprising about 11 weight% protein of which about 12% is leucine, about 4.8 g per 100 g inulin, a source of fat and a source of carbohydrate;
- a second compartment comprising about 26 g of a plurality of crisps having an average diameter of 3-8 mm comprising about 26.5 weight% protein and a coating consisting essentially of chocolate mixed with 0.38 µg of vitamin D3 per gram of the total coated crisp, whereby said percentage are based on the weight of the coated crisp. Such food product thus provides about 23.2 g of protein and about 9.8 µg of vitamin D3.

Also provided is packaged food product comprising:
- a first compartment comprising about 150 g of a liquid of spoonable composition comprising about 11 weight% protein of which about 12% is leucine, about 4.8 g per 100 g inulin, a source of fat and a source of carbohydrate;
- a second compartment comprising about 26.7 g of a plurality of crisps having an average diameter of 3-8 mm comprising about 30 weight% protein and a coating consisting essentially of chocolate mixed with 0.36 µg of vitamin D3 per gram of the total coated crisp, whereby said percentage are based on the weight of the coated crisp. Such food product thus provides about 22.7 g of protein and about 9.8 µg of vitamin D3.

The compositions and food products of the invention can be consumed by any individual of any age and at any time during the day. The compositions and food products preferably do not fall in the category of medical nutrition. They are particularly suitable for any individual that has an increased need for protein and/or vitamin D. Examples of such individuals are children, athletes, pregnant women, vegetarians, patients recovering from illness or surgery and elderly individuals. The compositions of the invention in particular support maintenance of muscle mass and strength, for instance in otherwise healthy persons. The compositions and food products are particularly suitable for consumption on a daily basis, such as once per day, for instance as a breakfast product or as a snack. For elderly individuals, it is preferred that the product is consumed approximately daily, e.g. five to seven times a week in order to provide the increased demand for protein and vitamin D of elderly individuals. As used herein, the term "elderly individual" refers to an individual having an age of 60 years or older.

The compositions and food products of the invention are further particularly suitable for use in stimulating muscle growth and in the treatment or prevention of loss of muscle mass, loss of muscle function, loss of physical performance, sarcopenia and frailty. Sarcopenia refers to the degenerative loss of skeletal muscle mass. Frailty refers to a geriatric syndrome characterized by an increased risk of progressive decline in health and function, with symptoms like low body weight due to unintentional weight loss, exhaustion, weakness, slow walking and low physical activity. Sarcopenia is a component of frailty.

Provided is therefore a solid nutritional product or crisp according to the invention for use in therapy. Also provided is a composition comprising a liquid of spoonable composition according to the invention and a solid nutritional product or crisp according to the invention for use in therapy.

Further provided is a solid nutritional product according to the invention for use in stimulating muscle growth, and/or for use in treating and/or preventing loss of muscle mass, loss of muscle function, loss of physical performance, sarcopenia and frailty. Also provided is a nutritional composition according to the invention comprising a liquid of spoonable composition according to the invention and a solid nutritional product or crisp according to the invention for use in stimulating muscle growth, and/or for use in treating and/or preventing loss of muscle mass, loss of muscle function, loss of physical performance, sarcopenia and frailty. Said treatment or prevention is preferably in an elderly individual having an age of 60 years or older.

Further provided is a method for stimulating muscle growth, and/or for treating and/or preventing loss of muscle mass, loss of muscle function, loss of physical performance, sarcopenia and frailty in an individual in need thereof, the method comprising administering an effective amount of a composition comprising a liquid of spoonable composition according to the invention and a solid nutritional product or crisp according to the invention to the individual. Said individual is preferably an elderly individual having an age of 60 years or older. Said effective amount is preferably a daily serving as defined herein.

### Examples

### Example 1. Preparation of a dairy product with high protein content

The dairy product was produced with Dutch low-fat milk powder and addition of gelling agents, natural aroma and colouring agents. Additional milk protein isolate powder (Glanbia, Kilkenny, Ireland) was added to a total amount of 10% protein by weight. Additional inulin was added to a total amount of 4.1 gr per 100 gr of the final product. This mixture was sterilised using UHT (Ultra High Temperature) processing.

### Example 2. Preparation of chocolate coated protein crisps with Vitamin D3

Protein crisps with a diameter of 4-7 mm were prepared consisting of rice flour, whey-protein and soy-lecithin, which resulted after the extrusion process in a final composition of about 52% protein, 40% carbohydrate and 1.0% fat. Chocolate used for the coating consisted of cocoa (45.5%), sugar (45.5%), cocoabutter (5%), milkfat (3.5%), <1% soy lecithin (<1%) and vanilla flavour (Callebaut, Lebbeke-Wieze, Belgium). Vitamin D3 dissolved in corn oil was mixed in the chocolate mass at a concentration of 0.75 µg/gr chocolate. Subsequently, the protein crisps were covered with chocolate containing vitamin D3 through a standard process resulting in an approximately 50/50 w/w ratio of chocolate/protein crisps.

### Example 3. Composition of nutritional products

The nutrient information of two nutritional compositions comprising the dairy product of example 1 and the chocolate coated protein crisps of Example 2 are shown in tables 1 and 2.

The product of table 1 consists of 150 grams of the diary product (85%) and 26 grams of the chocolate coated protein crisps (15%). The product has a nutritional value of 590 kJ (140 kcal) per 100 g.

**Table 1.**

| **Component** | **per 100 gr** | **per portion of 176 gr** |
|---|---|---|
| nutritional value, kJ (kcal) | 590 (140) | 1038 (247) |
| protein, g | 13.2 | 23.2 |
| fat, g | 2.5 | 4.5 |
| saturated fat, g | 1.5 | 2.6 |
| carbohydrates, g | 17.6 | 31.0 |
| sugars, g | 9.0 | 15.8 |
| fibres, g | 4.1 | 7.2 |
| inulin, g | 1.1 | 2.0 |
| vitamin D3, µg | 5.6 | 9.8 |

The product of table 2 consists of 150 grams of the diary product (84%), 26.7 grams of the chocolate coated protein crisps (15%) and 1% raspberry particles. The product has a nutritional value of 589 kJ (138 kcal) per 100 g.

**Table 2.**

| **Component** | **per 100 gr** | **per portion of 177 gr** |
|---|---|---|
| nutritional value, kJ (kcal) | 589 (138) | 1048 (246) |
| protein, g | 12.8 | 22.8 |
| fat, g | 2.5 | 4.5 |
| saturated fat, g | 1.5 | 2.7 |
| carbohydrates, g | 17.1 | 30.4 |
| sugars, g | 8.5 | 15.1 |
| fibres, g | 4.1 | 7.3 |
| inulin, g | 1.1 | 2.0 |
| vitamin D3, µg | 5.5 | 9.8 |

Tables 3 and 4 show the nutrient information of two further examples of nutritional products comprising a dairy product and chocolate coated protein crisps prepared as described in Examples 1 and 2. The protein crisps were covered with chocolate containing vitamin D3 in a 47/53 w/w ratio of chocolate/protein crisps.

The product of table 3 consists of 150 grams of the diary product (85%) with raspberry taste and 26 grams of the chocolate coated protein crisps (15%). The product has a nutritional value of 609 kJ (145 kcal) per 100 g.

**Table 3.**

| **Component** | **per 100 gr** | **per portion of 176 gr** |
|---|---|---|
| nutritional value, kJ (kcal) | 609 (145) | 1071 (255) |
| protein, g | 13.4 | 23.6 |
| fat, g | 2.6 | 4.6 |
| saturated fat, g | 1.6 | 2.8 |
| carbohydrates, g | 18.2 | 32.0 |
| sugars, g | 8.0 | 14.1 |
| fibres, g | 4.4 | 7.7 |
| inulin, g | 1.1 | 2.0 |
| vitamin D3, µg | 6.3 | 11.1 |

The product of table 4 consists of 150 grams of the diary product (85%) with banana taste, 26 grams of the chocolate coated protein crisps (15%). The product has a nutritional value of 609 kJ (145 kcal) per 100 g.

**Table 4.**

| **Component** | **per 100 gr** | **per portion of 176 gr** |
|---|---|---|
| nutritional value, kJ (kcal) | 609 (145) | 1072 (255) |
| protein, g | 13.5 | 23.8 |
| fat, g | 2.8 | 4.9 |
| saturated fat, g | 1.8 | 3.2 |
| carbohydrates, g | 17.9 | 31.5 |
| sugars, g | 7.9 | 13.9 |
| fibres, g | 4.4 | 7.7 |
| inulin, g | 1.1 | 2.0 |
| vitamin D3, µg | 6.3 | 11.1 |

### Example 4A. Stability of vitamin D

Chocolate coated crisps prepared as described in Example 2 were stored under various conditions to test the stability of vitamin D3 (VitD3).

The quantitative measurement of the VitD3 concentration in the samples was performed by Nutricontroll (Veghel, The Netherlands). In brief, after saponification the samples were dissolved in a suited organic solvent. After drying and evaporation the samples were analysed by liquid chromatography and MS/MS detection (ISO method 14892:200; published on: 2002-02-01, with modification of MS/MS detection instead of fluorescence detection and with deuterium labelled VitamineD3 as internal standard).

Sample number 1 was stored in a in a tightly closed plastic bag, put in a carton box and placed in a dark room at 20°C.

For sample number 2 the product was filled in so-called plastic top cups which can be placed on plastic containers. After filling the top cup with 26 gram of product the cup was sealed with aluminium foil and stored at 20°C in the dark.

Sample number 3 was prepared as number 2, but the top cups were placed in daylight continuously (i.e. 24 h per day).

The products were stored for several months with the following results (table 5):
Sample 1 did not show reduction of Vitamin D3 for at least 8 months.
Sample 2 did not show reduction of Vitamin D3 for at least 8 months .
Sample 3 showed a reduction of Vitamin D3 of around 20% after 8 months.

The results show that incorporation of VitD3 in a (chocolate) coating of protein crisps results in a very stable product with respect to VitD3 stability.

**Table 5. Amounts of VitD3 in IU per 100 gram.**

| sample | 09-10-2014 | 23-10-2014 | 30-10-2014 | 27-11-2014 | 08-06-215 |
|---|---|---|---|---|---|
| 1 | 974 | x | x | 1020 | 987 |
| 2 | x | 953 | x | 937 | 970 |
| 3 | x | 951 | 1020 | x | 773 |

### Example 4B. Stability of vitamin D

Chocolate coated crisps were prepared as described in Example 2 with the exception that vitamin D was not mixed with the chocolate prior to coating, but was dissolved in cacao butter and applied on the chocolate coated crisps, followed by an Arabic gom polish. The coated crisps were stored under various conditions to test the stability of vitamin D3 (VitD3), whereby the VitD3 concentration in the samples was performed as described in Example 4A.

Sample number 1 was stored in a in a tightly closed plastic bag, put in a carton box and placed in a dark room at 20°C.

For sample number 2 the product was filled in so-called plastic top cups which can be placed on plastic containers. After filling the top cup with 26 gram of product the cup was stored at 20°C in the dark.

Sample number 3 was prepared as number 2, but the top cups were placed in a daylight cabinet (i.e. 24 h per day daylight).

Sample number 4 was prepared as number 2, but the top cups were placed in daylight (before a window).

The results are shown in table 6. Storage in the dark for approximately six months (sample 1) does not have an effect on VitD3 stability. Storage in top cups and storage in the dark results in only a slight reduction of vitamin D content (sample 2), as compared to storage in daylight (samples 3 and 4).

**Table 6. Amounts of VitD3 in IU per 26 gram.**

| sample | 22-04-2016 | 24-06-2016 | 09-08-2016 | 05-10-2016 |
|---|---|---|---|---|
| 1 | 417 | 456 | 359 | 433 |
| 2 | xxx | 522 | 466 | 418 |
| 3 | xxx | xxx | 336 | 320 |
| 4 | xxx | xxx | 385 | 310 |

### Example 5. Product evaluation

The sensoric evaluation was executed by Essensor (Ede, The Netherlands). The products were tested blindly by a test panel consisting of 21 persons in the age of 65 to 75 years.

Two products were tested:
1) The product prepared as described in Examples 1-3 having a composition as shown in table 2; and
2) A commercially available product from Nutricia (the commercially available product coming closest to product 1): Nutridrink Protein, taste strawberry; Batchcode: 14D5078; this is a liquid product in a 200 ml container

The products were offered in a neutral 25 ml cup, in case of the product as described in the example, the coated crisps were mixed with the spoonable product in the required ratio.

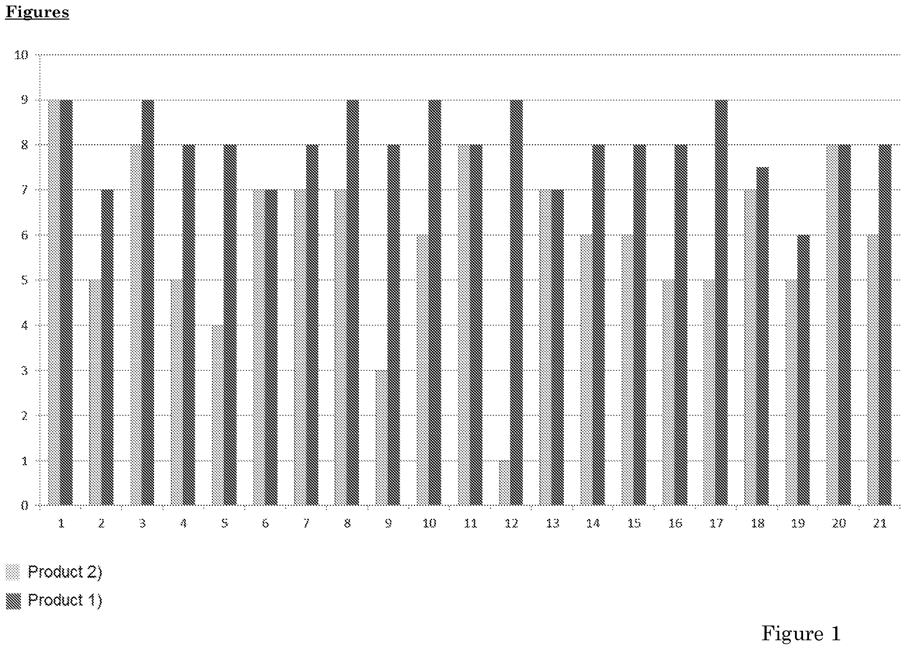

The results of this blind comparison test were as follows (see also fig. 1):
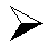 80% of the participants rate product 1) as better or equal in taste to product 2)
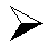 60% of the participants prefer product 1)
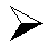 The average rating of all participants is 7.7 (on a scale from 1 to 10, with 10 the best taste)
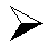 The coated crisps were described as surprising, real taste-makers, making the difference. The crunchiness of the product was especially liked. It was further appreciated that the product did not have a bitter or 'sandy' protein taste. In addition, the product was found to have a pleasant aftertaste.
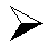 The aftertaste of product 2) was evaluated as unpleasant and the product was considered too sweet.

### Figure legend

Figure 1 shows the overall evaluation of products 1) and 2) by each participant.

## Claims

1. A nutritional composition comprising:
- a liquid or spoonable nutritional composition comprising between 9 and 15% protein, a source of fat and a source of carbohydrate, and
- a plurality of solid nutritional products having an average diameter of 2-10 mm and comprising at least 20 weight% protein and comprising a coating that covers at least a portion of said products, said coating comprising a vitamin D compound,
wherein said products comprises at least 0.1 µg of said vitamin D compound per gram of the coated solid nutritional product,
wherein said nutritional composition comprises:
- 75-90% by weight of said liquid or spoonable nutritional composition and 10-25% by weight of said plurality of solid nutritional products, and
- at least 12.5 gr protein and 4.5-6.5 µg of said vitamin D compound per 100 gr of the total nutritional composition.

2. The nutritional composition according to claim 1 wherein the solid nutritional product is a coated crisp

3. The nutritional composition according to claim 1 or 2, wherein said coating comprises chocolate and covers essentially the entire surface of the solid nutritional product.

4. The nutritional composition according to any one of claims 1-3, wherein said vitamin D compound is selected from the group consisting of vitamin D2 and vitamin D3, preferably wherein said vitamin D compound is vitamin D3.

5. The nutritional composition according to any one of claims 1-4, comprising 25-35 weight% protein, 30-75 weight% coating and 0.3-0.5 µg of said vitamin D compound per gram of the coated solid nutritional product.

6. The nutritional composition according to any one of claims 1-5 comprising 12.5 - 15 g protein per 100 gr of the total nutritional composition.

7. The nutritional composition according to any one of claims 1-6 having an energetic value of between 120 and 180 kcal per 100 g, preferably of between 120 and 150 kcal per 100 g.

8. The nutritional composition according to any one of claims 1-7 wherein the liquid or spoonable composition and the plurality of solid food products preferably comprise at least 95% of the total weight of the nutritional composition.

9. The nutritional composition according to any one of claims 1-8 further comprising at least 2 weight% of fibre.

10. The nutritional composition according to any one of claims 1-9 comprising at least 3.5 gr fibre and at least 5 gr chocolate per 100 gr of the total nutritional composition.

11. The nutritional composition according to any one of claims 1-10 wherein said nutritional composition is a single serving of 150-200 g.

12. The nutritional composition according to any one of claims 1-11, wherein said liquid or spoonable nutritional composition and said plurality of solid nutritional products are present in separate compartments.

13. A packaged food product comprising at least a first and a second compartment, said product further comprising the nutritional composition according to any one of claims 1-12, wherein said first compartment comprises said liquid or spoonable nutritional composition and said second compartment comprises said plurality of solid nutritional products.

14. The nutritional composition according to any one of claims 1-12 for use in stimulating muscle growth and/or maintaining muscle mass and function and/or for use in treating and/or preventing loss of muscle mass, loss of muscle function and/or loss of physical performance

## Patentansprüche

1. Nährstoffzusammensetzung, umfassend:
- eine flüssige oder löffelbare Nährstoffzusammensetzung, umfassend zwischen 9 und 15 % Protein, eine Fettquelle und eine Kohlenhydratquelle , und
- eine Vielzahl fester Nährstoffprodukte mit einem durchschnittlichen Durchmesser von 2-10 mm, und umfassend wenigstens 20 Gew.-% Protein und umfassend einen Überzug, der wenigstens einen Teil der Produkte bedeckt, der Überzug umfassend eine Vitamin D-Verbindung, wobei die Produkte wenigstens 0,1 µg der Vitamin D-Verbindung pro Gramm des überzogenen festen Nährstoffproduktes umfassen,
wobei die Nährstoffzusammensetzung umfasst:
- 75-90 Gew.-% der flüssigen oder löffelbaren Nährstoffzusammensetzung und 10-25 Gew.-% der Vielzahl fester Nährstoffprodukte, und
- wenigstens 12,5 g Protein und 4,5-6,5 µg der Vitamin D-Verbindung pro 100 g der gesamten Nährstoffzusammensetzung.

2. Nährstoffzusammensetzung nach Anspruch 1, wobei das feste Ernährungsprodukt ein überzogener Chip ist

3. Nährstoffzusammensetzung nach Anspruch 1 oder 2, wobei der Überzug Schokolade umfasst und im Wesentlichen die gesamte Oberfläche des festen Nährstoffprodukts bedeckt.

4. Nährstoffzusammensetzung nach einem der Ansprüche 1-3, wobei die Vitamin D-Verbindung ausgewählt ist aus der Gruppe, bestehend aus Vitamin D2 und Vitamin D3, vorzugsweise wobei die Vitamin D-Verbindung Vitamin D3 ist.

5. Nährstoffzusammensetzung nach einem der Ansprüche 1-4, umfassend 25-35 Gew.-% Protein, 30-75 Gew.-% Überzug und 0,3-0,5 µg der Vitamin D-Verbindung pro Gramm des überzogenen festen Nährstoffprodukts.

6. Nährstoffzusammensetzung nach einem der Ansprüche 1-5, umfassend 12,5-15 g Protein pro 100 g der gesamten Nährstoffzusammensetzung.

7. Nährstoffzusammensetzung nach einem der Ansprüche 1-6 mit einem energetischen Wert zwischen 120 und 180 kcal pro 100 g, vorzugsweise zwischen 120 und 150 kcal pro 100 g.

8. Nährstoffzusammensetzung nach einem der Ansprüche 1-7, wobei die flüssige oder löffelbare Zusammensetzung und die Vielzahl von festen Lebensmittelprodukte vorzugsweise wenigstens 95 % des Gesamtgewichts der Nährstoffzusammensetzung umfassen.

9. Nährstoffzusammensetzung nach einem der Ansprüche 1-8, ferner umfassend wenigstens 2 Gew.-% Ballaststoff.

10. Nährstoffzusammensetzung nach einem der Ansprüche 1-9, umfassend wenigstens 3,5 g Ballaststoff und wenigstens 5 g Schokolade pro 100 g der gesamten Nährstoffzusammensetzung.

11. Nährstoffzusammensetzung nach einem der Ansprüche 1-10, wobei die Nährstoffzusammensetzung eine Einzelportion von 150-200 g ist.

12. Nährstoffzusammensetzung nach einem der Ansprüche 1-11, wobei die flüssige oder löffelbare Nährstoffzusammensetzung und die Vielzahl fester Nährstoffprodukte in getrennten Fächern vorhanden ist.

13. Verpacktes Lebensmittelprodukt, umfassend wenigstens ein erstes und ein zweites Fach, das Produkt ferner umfassend die Nährstoffzusammensetzung nach einem der Ansprüche 1-12, wobei das erste Fach die flüssige oder löffelbare Nährstoffzusammensetzung umfasst und das zweite Fach die Vielzahl fester Nährstoffprodukte umfasst.

14. Nährstoffzusammensetzung nach einem der Ansprüche 1-12 zur Verwendung beim Stimulieren von Muskelwachstums und/oder Aufrechterhalten von Muskelmasse und -funktion und/oder zur Verwendung beim Behandeln und/oder Vorbeugen des Verlusts von Muskelmasse, Verlusts von Muskelfunktion und/oder Verlusts von körperlicher Leistung.

## Revendications

1. Composition nutritionnelle comprenant :
- une composition nutritionnelle liquide ou pouvant être prélevée à la cuillère comprenant entre 9 et 15 % de protéines, une source de matières grasses et une source de glucides, et
- plusieurs produits nutritionnels solides ayant un diamètre moyen de 2 à 10 mm et comprenant au moins 20 % en poids de protéines et comprenant un enrobage qui recouvre au moins une partie desdits produits, ledit enrobage comprenant un composé de vitamine D, lesquels produits comprennent au moins 0,1 µg dudit composé de vitamine D par gramme du produit nutritionnel solide enrobé,
laquelle composition nutritionnelle comprend :
- 75 à 90 % en poids de ladite composition nutritionnelle liquide ou pouvant être prélevée à la cuillère et 10 à 25 % en poids desdits plusieurs produits nutritionnels solides, et
- au moins 12,5 g de protéines et 4,5 à 6,5 µg dudit composé de vitamine D pour 100 g de la composition nutritionnelle totale.

2. Composition nutritionnelle selon la revendication 1, dans laquelle le produit nutritionnel solide est une croustille enrobée.

3. Composition nutritionnelle selon la revendication 1 ou 2, dans laquelle ledit enrobage comprend du chocolat et recouvre pratiquement toute la surface du produit nutritionnel solide.

4. Composition nutritionnelle selon l'une quelconque des revendications 1 à 3, dans laquelle ledit composé de vitamine D est choisi dans le groupe constitué par la vitamine D2 et la vitamine D3, de préférence dans laquelle ledit composé de vitamine D est la vitamine D3.

5. Composition nutritionnelle selon l'une quelconque des revendications 1 à 4, comprenant 25 à 35 % en poids de protéines, 30 à 75 % en poids d'enrobage et 0,3 à 0,5 µg dudit composé de vitamine D par gramme du produit nutritionnel solide enrobé.

6. Composition nutritionnelle selon l'une quelconque des revendications 1 à 5, comprenant 12,5 à 15 g de protéines pour 100 g de la composition nutritionnelle totale.

7. Composition nutritionnelle selon l'une quelconque des revendications 1 à 6, ayant une valeur énergétique comprise entre 120 et 180 kcal pour 100 g, de préférence comprise entre 120 et 150 kcal pour 100 g.

8. Composition nutritionnelle selon l'une quelconque des revendications 1 à 7, dans laquelle la composition liquide ou pouvant être prélevée à la cuillère et les plusieurs produits alimentaires solides représentent de préférence au moins 95 % du poids total de la composition nutritionnelle.

9. Composition nutritionnelle selon l'une quelconque des revendications 1 à 8, comprenant en outre au moins 2 % en poids de fibres.

10. Composition nutritionnelle selon l'une quelconque des revendications 1 à 9, comprenant au moins 3,5 g de fibres et au moins 5 g de chocolat pour 100 g de la composition nutritionnelle totale.

11. Composition nutritionnelle selon l'une quelconque des revendications 1 à 10, laquelle composition nutritionnelle est une portion individuelle de 150 à 200 g.

12. Composition nutritionnelle selon l'une quelconque des revendications 1 à 11, dans laquelle ladite composition nutritionnelle liquide ou pouvant être prélevée à la cuillère et lesdits plusieurs produits nutritionnels solides sont présents dans des compartiments séparés.

13. Produit alimentaire conditionné comprenant au moins un premier et un deuxième compartiments, ledit produit comprenant en outre la composition nutritionnelle selon l'une quelconque des revendications 1 à 12, dans lequel ledit premier compartiment comprend ladite composition nutritionnelle liquide ou pouvant être prélevée à la cuillère et ledit deuxième compartiment comprend lesdits plusieurs produits nutritionnels solides.

14. Composition nutritionnelle selon l'une quelconque des revendications 1 à 12 pour une utilisation dans la stimulation de la croissance musculaire et/ou le maintien de la masse et de la fonction musculaires et/ou pour une utilisation dans le traitement et/ou la prévention d'une perte de masse musculaire, d'une perte de fonction musculaire et/ou d'une perte de performances physiques.
